# EUROPEAN PATENT SPECIFICATION

(11) **EP 1 347 928 B1**
(45) Date of publication and mention of the grant of the patent: **24.11.2004**
(21) Application number: 01999520.8
(22) Date of filing: 05.12.2001
(51) Int. Cl.: B65G 59/02, B65G 47/248, F27D 3/00

(54) **DEPALLETIZER**
ENTPALLETIERER
DEPALETISEUR

(30) Priority: 07.12.2000 NO 20006232
(43) Date of publication of application: 01.10.2003
(73) Proprietor: Baekkedal, Dag, 2337 Tangen (NO)
(72) Inventor: Baekkedal, Dag, 2337 Tangen (NO)
(74) Representative: Stein, Jan Anders Lennart
(86) International application number: PCT/NO2001/000483
(87) International publication number: WO 2002/046073

(56) References cited:
- DE-A- 1 815 573
- US-A- 3 478 899
- US-A- 3 679 070
- US-A- 4 106 635
- US-A- 4 302 141

## Description

The present invention relates to a depalletizer for layered removal and orientation of elongate elements stacked onto each other, preferably upon a pallet, which stack can be elevated as the respective layers are removed, in which a substantially horizontal shove table and pusher means are arranged adjacent to the top layer of the stack of elongate elements, which pusher means can be activated to displace the top layer of elongate elements along the top of the next layer of elongate elements and onto the shove table. Such an apparatus is disclosed in DE-A-1 815 573.

The basis for the present invention is the handling of metal ingots being supplied upon pallets, which ingots are to be introduced into melting furnaces. Metal ingots are supplied in many sizes and in various configurations. For example, a magnesium ingot is a chill cast ingot weighting typically 4, 7, 8, 12 or 23 kilo and has about one hundred different configurations depending on the actual manufacturer. A typical dimensional measure will be 620mm in length, 65mm in height and 120mm in width having a predetermined tapering toward the top and at the ends in order to enable the chill mould to easily slip after casting. It is also typical that they are stacked alternately in layers having orientation perpendicular to each other. A pallet of ingots of this type is normally weighting in order of magnitude 1000kg. A typical metal changing apparatus is shown in US-A-3 478 899.

Even if there have been some proposals to automation of this handling process, they have been very complicated and in little extent taken regard of the numerous forms and sizes that the ingots have. Manual handling is still extensively used in which a person is picking the ingots one by one from a pallet and put these with proper orientation into a mechanical apparatus introducing the ingot to the melting furnace. As well-known, such melting furnaces are in operation day and night, often having five shifts, so the many man-hours are cost intensive for the company. In addition this is heavy bodywork. At the larger plants many kilos are melted down per hour.

According to the present invention a depalletizer of the introductorily described type is provided, which depalletizer is distinguished in that the shove table terminates in an in respect of the displacement direction oblique edge that defines the beginning of a downward sloping chute having converging side walls.

Though not any prerequisite, it is typical that the elongate elements are arranged alternately perpendicular to each other in the respective layers. If they are laying in the same direction in the respective layers, partition plates will normally be necessary between the layers such that the elements are able to slide thereon.

Though the depalletizer, in principle, can be used to depalletize any suitable objects where a need is present for automated removal from the pallet and orientation of the objects, the present depalletizer is developed with regard to that the elongate elements are metal ingots, suitably with a substantially parallelepipedic or trapezoidal configuration. Also to be mentioned, even if the term "depalletizing" is used throughout the specification and claims, it is not any prerequisite that the stack of elements physically is supported upon a pallet.

In order to provide proper stability to the stack, the depalletizer may suitably include a shaft, or chute, in which the elongate elements are elevated. The shaft may have three closed side walls and the fourth one open for access by a forklift or jack trolley or similar.

In one embodiment the pusher means can include an over head trolley that is movable along tracks on top of the depalletizer, where the trolley carries a beam for cooperation with the elongate elements, either against their ends or longitudinal sides.

In a second embodiment the pusher means can in all simplicity be at least one working cylinder carrying a beam for cooperation with the elongate elements, either at the ends or longitudinal sides thereof.

In a variant, the chute having the converging side walls can terminate in a funnel like pipe spool for deposition at a defined spot.

Instead of a rectilinear, oblique edge, as an alternative, the oblique edge can describe an arch, preferably having a concave shape facing away from the stack.

However, it is revealed by way of tests that when the oblique edge is rectilinear and extends substantially 45° with respect to the displacement direction, it works excellent.

Other and further objects, features and advantages will appear from the following description of one for the time being preferred embodiment of the invention, which is given for the purpose of description, without thereby being limiting, and given in context with the appended drawings where:
- Fig.1: shows a typical pallet with metal ingots that are to be depalletized,
- Fig.2: shows an elevation side view of a depalletizer according to the invention,
- Fig.3: shows an end view of the depalletizer according to fig.2, and
- Fig.4: shows a top view of the depalletizer according to fig.2.

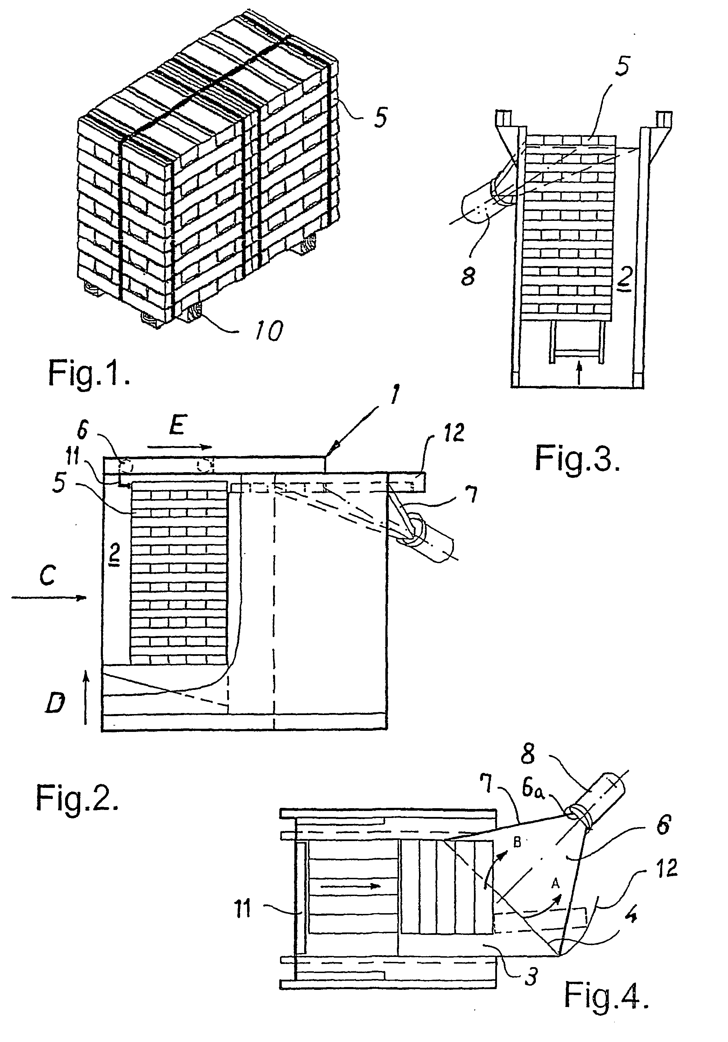

Reference is firstly made to fig.1 that shows a pallet 10 upon which metal ingots 5 are stacked. The metal ingots 5 are disposed in layers onto each other and all the ingots in one layer have the same longitudinal orientation. The longitudinal orientation of the metal ingots 5 in one layer is perpendicular to the longitudinal orientation of the metal ingots 5 in the layer underneath and the layer above. This is the normal way to stack metal ingots 5 in order to ensure appropriate stability during transportation. Further, as indicated on the figure, the stack of metal ingots 5 are strapped firmly to the pallet 10 in order to secure the load during transportation.

It is to be understood, however, that the way the ingots are stacked is not critical for the depalletizer 1 according to the invention. If the ingots 5 are disposed with the same longitudinal orientation in all the layers, or in several adjacent layers, the depalletizer is quite capable to handle this. Then it will be an advantage if a partition plate is arranged between each layer, or that the ingots 5 are displaced from the stack in the longitudinal direction thereof.

Fig.2 shows the depalletizer 1 viewed from the side. The pallet with the ingots 5 are introduced in the direction of the arrow C. Fig.3 shows the depalletizer viewed in the direction of the arrow C. The ingots 5 are placed into a shaft 2 having closed side walls, except the one where the ingots 5 are introduced, which wall is omitted. The shaft 2 provides proper support and stability to the stack both during transfer into the shaft 2 and by the subsequent elevation of the stack in the shaft 2. The elevation of the stack 2 is in the direction of the arrow D.

Fig.4 shows the depalletizer 1 in top view. Adjacent to the stack of ingots 5, more exactly the top layer, a shove table 3 is arranged onto which the ingots 3 are displaced. The shove table 3 terminates in a rectilinear obliquely extending edge 4 over which the ingots are displaced. On the illustrated embodiment this rectilinear oblique edge 4 forms approximately 45° with the displacing direction of the ingots 3, as shown with the arrow E on fig.2. Even if it is found by experiments that a rectilinear oblique edge of 45° is working perfect, this angle can differ substantially and still about the same is obtained. It is also quite possible to let this edge describe an arch, preferably with the opening of the arch facing in the direction of the arrow E.

From the edge 4 the shove table 3 is transformed to a downward inclining chute 6 having upward extending side walls 7 that converge toward the end 6a of the chute 6. A pipe spool 8 that project in a predetermined direction for further delivery is fixed to the end 6a.

On figure 2 is a trolley 9 including a beam 11 indicated. The trolley 9 is movable in the direction of the arrow E along rails or tracks provided on top of the depalletizer 1. The trolley 9 straddles the stack of ingots 5 and the shove table 3. The trolley 9 can be driven in any suitable way suggested by a person skilled in the art. The trolley 9 can also be replaced by one or more linear motors, such as hydraulic cylinders, worm screws or similar, that is/are directly connected to the beam 11 and is able to take the beam in the direction of the arrow E.

How the depalletizer 1 is operated and handles ingots 5 will now be described. A stack of ingots 5 is disposed into the shaft 2, for example by means of a forklift or jack trolley. The forklift can be used to elevate the stack in the shaft 2. Alternatively an independent hoisting means can be arranged in the shaft 2 in association with the depalletizer 1.

The stack is elevated in the shaft 2 until the top layer of ingots 5 is in level with the shove table 3. The beam 11 is then brought to contact with the ingots 5 of the top layer. The beam 11 is activated for motion in the direction of arrow E and pushes all the ingots 5 in that layer onto the shove table 3 and toward the edge 4. When the ingots 5 reach the edge 4, the centre of gravity of each individual ingot 5 will gradually pass the edge 4 and thus tilt it over onto the inclined chute 6.

Due to the oblique edge 4, the ingots 5 will automatically, either they arrive in the longitudinal or transversal direction, get turned and oriented so that a short end of the ingot 5 is pointing downward the chute 6 and toward the pipe spool 8. The turning motion of the ingots 5 as they pass over the edge 4, is illustrated on fig.4 by the arrow A for ingots that are supplied in their longitudinal direction and by the arrow B for those that are supplied in their transversal direction.

In addition an arched baffle plate 12 is provided for safe guiding of the turning motion of ingots 5 that are supplied in their longitudinal direction. The divergent side walls 7 on the chute 6 will focus the ingots 5 toward the end 6a and into the pipe spool 8. The pipe spool 8 can be in communication with a conveyor that carries the ingots 5 further on to a melting furnace. When the entire layer of ingots 5 is displaced over the edge 4, the beam 11 is returned to the initial position. Subsequently the stack is elevated until the next layer of ingots 5 is in level with the shove table 3 and the above described sequence is repeated.

## Claims

1. A depalletizer (1) for layered removal and orientation of elongate elements (5) stacked onto each other, preferably upon a pallet (10), which stack of elongate elements can be elevated (D) as the respective layers are removed, in which a substantially horizontal shove table (3) and pusher means are arranged adjacent to the top layer of the stack of elongate elements (5), which pusher means can be activated to displace the top layer of elongate elements (5) along the top of the next layer of elongate elements (5) and onto the shove table (3), **characterised in that** the shove table (3) terminates in an edge (4) extending obliquely in respect of the displacement direction (E), which oblique edge (4) defines the beginning of a downward sloping chute (6) having converging side walls (7).

2. The depalletizer according to claim 1, **characterised in that** the elongate elements (5) are arranged alternately perpendicular to each other in the respective layers.

3. The depalletizer according to claim 1 or 2, **characterised in that** the elongate elements (5) are metal ingots having a substantially parallelepipedic or trapezoidal configuration.

4. The depalletizer according to claim 1, **characterised in that** the depalletizer includes a shaft (2) in which the stack of the elongate elements (5) is elevated.

5. The depalletizer according to any of the claims 1-4, **characterised in that** the pusher means comprises an over head trolley (9) movable along tracks on the depalletizer (1), which trolley (9) carries a beam (11) for cooperation with the elongate elements (5), either at the ends or longitudinal sides thereof.

6. The depalletizer according to any of the claims 1-4, **characterised in that** the pusher means is at least one working cylinder that carries a beam (11) for cooperation with the elongate elements (5), either against their ends or their longitudinal sides.

7. The depalletizer according to any of the claims 1-6, **characterised in that** the chute (6) having the converging side walls (7) terminates in a funnel like pipe spool (8) for delivery at a defined spot.

8. The depalletizer according to any of the claims 1-7, **characterised in that** the oblique edge (4) describes an arch.

9. The depalletizer according to any of the claims 1-7, **characterised in that** the oblique edge (4) forms substantially 45° with the displacement direction (E).

## Patentansprüche

1. Entpalletierer (1) zum schichtweisen Abnehmen und Orientieren von länglichen Elementen (5), die vorzugsweise auf einer Palette (10) aufeinander gestapelt sind, wobei der Stapel länglicher Elemente angehoben (D) werden kann, wenn die jeweilige Schicht abgenommen wird, in welchem Entpalletierer ein im wesentlichen horizontaler Schiebetisch (3) und eine Stoßeinrichtung neben der oberen Schicht des Stapels länglicher Elemente (5) angeordnet werden, wobei die Stoßeinrichtung aktiviert werden kann, um die obere Schicht länglicher Elemente (5) entlang der Oberseite der nächsten Schicht länglicher Elemente (5) und auf den Schiebetisch (3) zu verschieben, **dadurch gekennzeichnet, daß** der Schiebetisch (3) in einer Kante (4) endet, die sich schräg zur Verschiebungsrichtung (E) erstreckt, wobei die schräge Kante (4) den Anfang einer abwärts geneigten Rutsche (6) definiert, die zusammenlaufende Seitenwände (7) hat.

2. Entpalletierer nach Anspruch 1, **dadurch gekennzeichnet, daß** die länglichen Elemente (5) von Schicht zu Schicht abwechselnd senkrecht zueinander angeordnet sind.

3. Entpalletierer nach Anspruch 1 oder 2, **dadurch gekennzeichnet, daß** die länglichen Elemente (5) Metallbarren sind, die im wesentlichen parallelepipedförmig oder trapezoidförmig sind.

4. Entpalletierer nach Anspruch 1, **dadurch gekennzeichnet, daß** der Entpalletierer einen Schacht (2) aufweist, in welchem der Stapel länglicher Elemente (5) angehoben wird.

5. Entpalletierer nach einem der Ansprüche 1 bis 4, **dadurch gekennzeichnet, daß** die Stoßeinrichtung eine Deckenlaufkatze (9) aufweist, die entlang der Schienen des Entpalletierers (1) bewegbar ist, wobei die Laufkatze (9) einen Ausleger (11) trägt, um mit den länglichen Elementen (5) entweder an deren Enden oder an deren Längsseiten zusammenzuwirken.

6. Entpalletierer nach einem der Ansprüche 1 bis 4, **dadurch gekennzeichnet, daß** die Stoßeinrichtung mindestens ein Arbeitszylinder ist, der einen Ausleger (11) trägt, um mit den länglichen Elementen (5) entweder gegen ihre Enden oder ihre Längsseiten zu wirken.

7. Entpalletierer nach einem der Ansprüche 1 bis 6, **dadurch gekennzeichnet, daß** die Rutsche (6), die die zusammenlaufenden Seitenwände (7) hat, in einer trichterförmigen Rohrspule (8) für eine Abgabe an einem definierten Punkt endet.

8. Entpalletierer nach einem der Ansprüche 1 bis 7, **dadurch gekennzeichnet, daß** die schräge Kante (4) einen Bogen beschreibt.

9. Entpalletierer nach einem der Ansprüche 1 bis 7, **dadurch gekennzeichnet, daß** die schräge Kante (4) mit der Verschiebungsrichtung (E) einen Winkel von im wesentlichen 45° bildet.

## Revendications

1. Dépalettiseur (1) pour l'enlèvement en couche et l'orientation d'éléments allongés (5) empilés les uns sur les autres, de préférence sur une palette (10), laquelle pile d'éléments allongés peut être élevée (D) au fur et à mesure que les couches respectives sont enlevées, dans lequel une table de poussée sensiblement horizontale (3) et des moyens pousseurs sont agencés de façon adjacente à la couche supérieure de la pile d'éléments allongés (5), lesquels moyens pousseurs peuvent être actionnés pour déplacer la couche supérieure d'éléments allongés (5) le long du dessus de la couche suivante d'éléments allongés (5) et sur la table de poussée (3), **caractérisé en ce que** la table de poussée (3) se termine en un bord (4) s'étendant de façon oblique par rapport à la direction de déplacement (E), lequel bord oblique (4) définit le début d'une glissière inclinée vers le bas (6) ayant des parois latérales convergentes (7).

2. Dépalettiseur selon la revendication 1, **caractérisé en ce que** les éléments allongés (5) sont agencés alternativement de façon perpendiculaire les uns par rapport aux autres dans les couches respectives.

3. Dépalettiseur selon la revendication 1 ou 2, **caractérisé en ce que** les éléments allongés (5) sont des lingots métalliques ayant une configuration sensiblement parallélépipédique ou trapézoïdale.

4. Dépalettiseur selon la revendication 1, **caractérisé en ce que** le dépalettiseur comprend une cage (2) dans laquelle la pile des éléments allongés (5) est élevée.

5. Dépalettiseur selon l'une quelconque des revendications 1 à 4, **caractérisé en ce que** les moyens pousseurs comprennent un chariot suspendu (9) mobile le long de voies sur le dépalettiseur (1), lequel chariot (9) porte une traverse (11) pour coopération avec les éléments allongés (5), soit au niveau des extrémités ou des côtés longitudinaux de celui-ci.

6. Dépalettiseur selon l'une quelconque des revendications 1 à 4, **caractérisé en ce que** les moyens pousseurs sont au moins un cylindre de travail qui porte une traverse (11) pour coopération avec les éléments allongés (5), soit au niveau des extrémités ou des côtés longitudinaux de celui-ci.

7. Dépalettiseur selon l'une quelconque des revendications 1 à 6, **caractérisé en ce que** la glissière (6) ayant les parois latérales convergentes (7) se termine en une manchette de tuyau en forme d'entonnoir (8) pour distribution au niveau d'un endroit défini.

8. Dépalettiseur selon l'une quelconque des revendications 1 à 7, **caractérisé en ce que** le bord oblique (4) décrit une arche.

9. Dépalettiseur selon l'une quelconque des revendications 1 à 7, **caractérisé en ce que** le bord oblique (4) forme sensiblement 45° avec la direction de déplacement (E).
